# EUROPÄISCHE PATENTSCHRIFT

(11) **EP 0 984 361 B1**
(45) Veröffentlichungstag und Bekanntmachung des Hinweises auf die Patenterteilung: **23.01.2008**
(21) Anmeldenummer: 99202835.7
(22) Anmeldetag: 01.09.1999
(51) Int. Cl.: G06F 13/40

(54) **Schaltungsanordnung zur BIAS Einstellung von Rechnerbuspegeln**
Circuit arrangement for bias adjustment of a computer bus level
Dispositif de circuit pour l'ajustement de la polarisation de niveau de bus d'ordinateur

(30) Priorität: 03.09.1998 DE 19840086
(43) Veröffentlichungstag der Anmeldung: 08.03.2000
(73) Patentinhaber: NXP B.V., 5656 AG Eindhoven (NL)
(72) Erfinder: Mores, Robert Dr., Philips Corporate IP GmbH, 52064 Aachen (DE)
(74) Vertreter: Volmer, Georg

(56) Entgegenhaltungen:
- US-A- 4 220 876
- US-A- 5 572 658

## Beschreibung

Die Erfindung betrifft eine Schaltungsanordnung zur BIAS Einstellung von Buspegeln für ein System zum Übertragen von binären Daten auf wenigstens einem Leiter, an den mehrere Stationen mit Sendern und Empfängern mit vorgeschalteten Tiefpässen angeschlossen sind, wobei die Leitung einen rezessiven Pegel führt und von einem Sender auf einen dominanten Pegel schaltbar ist.

Anwendungsgebiete für derartige Systeme sind die Vernetzung von Steuergeräten oder Endgeräten insbesondere in der Automobil- und Industrieelektronik. In solchen Umgebungen treten starke Störungen z.B. durch Einschalten von großen Lasten auf, wodurch besondere Anforderungen an die Übertragungssicherheit gestellt werden.

Es sind bisher Übertragungssysteme bekannt, bei denen der rezessive Pegel mit einem Widerstand eingestellt wird und der dominante Pegel mit einem Treiber eingespeist wird. Der Treiber ist dabei niederohmiger als der Widerstand, so daß Störsignale beim dominanten Pegel, die fälschlich ein rezessives Signal vortäuschen könnten, weniger wahrscheinlich sind als Störsignale bei rezessiven Pegeln, die ein dominantes Signal vortäuschen könnten.

Um Übertragungsfehler durch Masseversatz und elektromagnetische Einstrahlung zu vermeiden, werden möglichst hohe Pegelunterschiede definiert. Der Pegelunterschied darf nicht zu groß werden, da sonst eine durch große Pegelunterschiede hervorgerufene Abstrahlung auftritt.

Eine niederohmige Einspeisung des rezessiven Pegels erzwingt eine noch niederohmigere Einspeisung des dominanten Pegels, damit werden höhere Ströme bewirkt, die eine höhere Abstrahlung hervorrufen. Wird der rezessive Pegel mit einem Widerstand eingespeist und es erfolgt eine Einstrahlung, steigt der Strom nach Erreichen der Empfängerschwelle weiter. Dies führt zu einer unnötig hohen Abstrahlung. Der Strom ist deswegen unnötig, weil eine Verbesserung der Einstrahlfestigkeit durch den erhöhten Strom oberhalb der Empfängerschwelle nicht mehr erreicht werden kann.

Aufgabe der Erfindung ist es deshalb, eine Anordnung anzugeben, die auch beim rezessiven Pegel die Einstrahlfestigkeit erhöht.

Diese Aufgabe wird durch die Merkmale des unabhängigen Anspruchs gelöst.

Der rezessive Pegel ist auf der Leitung permanent von allen beteiligten Stationen eingestellt. Der Arbeitspunkt des rezessiven Treibers liegt z.B. bei 0V. Bei größer werdenden Einstrahlpegeln oberhalb des Arbeitspunktes des Treibers kann der Strom wieder ansteigen, ohne daß der für die Abstrahlung relevante Strom im Arbeitspunkt davon betroffen wäre. Auf diese Weise ist auch für hohe Einstrahlpegel ein niedrigerer Widerstand im ersten Quadranten erreicht. Da der Treiber für positive Spannungen niederohmiger ist als für negative Spannungen, wird sich im Falle einer Einstrahlung während eines rezessiven Pegels der Gleichspannungspegel vorzugweise noch deutlicher in Richtung rezessiver Pegel bewegen, so daß die logische Auswertung in jedem Falle rezessiv bleibt. Der mittlere Spannungswert bewegt sich in Richtung rezessiv, weil die von einer Störung eingekoppelten Spannungen im Bereich der positiven Spannung stärker gedämpft werden als im Bereich der negativen Spannungen. Der dominante Pegel ist davon nicht betroffen, weil der Treiber in der Regel sehr niederohmig ist.

Vorteilhaft ist, daß die Schaltungsanordnung eine Stromquellenabschlußanordnung aufweist, die das Verhältnis der Ströme auf dem Bus und der damit verbundenen Abstrahlung zu der Geschwindigkeit, mit der sich der rezessive Pegel einstellt, optimiert.

Eine Stromquellenanordnung in der Abschlußanordnung bewirkt für den rezessiven Pegel einen konstanten Strom im Falle einer Einstrahlung über den Bereich einer Spannung unterhalb der Empfängerschwelle des Empfängers bis zu einer Spannung über dem Arbeitspunkt des Treibers für den dominanten Pegel. Damit wird erreicht, daß während des rezessiven Pegels und einer Einstrahlung der Strom nicht linear weitersteigt und somit die Abstrahlung erhöht. Bei kleinen Einstrahlungen steigt der Strom auf dem Leiter linear bis zu einer Spannung an, die vor der Empfängerschwelle liegt. Der Anstieg des Stroms ist dabei steiler, als der Anstieg des Stroms bei Abschluß der Leitung mit einem Widerstand.

In Systemen, in denen Daten mittels zweier Pegel, rezessiv und dominant, übertragen werden, bestimmt im wesentlichen die Geschwindigkeit, mit der der rezessive Pegel eingestellt werden kann, die maximal mögliche Übertragungsrate. Die empfangsseitige Auswertung der logischen Pegel erfolgt mittels Empfänger und vorgeschalteten Tiefpaß mit einer vorgegebenen Empfängerschwelle.

In der EP 0288740 wird ein System beschrieben, bei der mit einer Triggerschaltung, die an eine Busleitung angeschaltet ist, die Umladezeit zwischen zwei binären Pegelzuständen verkürzt wird. Hier wird die Busleitung in Teilleitungen eingeteilt und alle Teilleitungen über logische Gatter so verknüpft, daß eine beschleunigte Einzelumladung erfolgt.

Um die Buskapazität noch ausreichend schnell umzuladen und so insbesondere beim Einstellen des rezessiven Pegels eine für die gewünschte Datenübertragungsrate ausreichende Geschwindigkeit zu erreichen, muß die Differenz der Pegel gewissen Kriterien unterliegen. Bei dem Verfahren, bei dem der rezessive Pegel mit einem Widerstand eingestellt wird, wird die Buskapazität zunächst mit einem hohen Strom und dann mit immer kleiner werdendem Strom umgeladen - entsprechend dem linearen Strom-/Spannungsverhältnis am Widerstand. Bei der erfindungsgemäßen strombegrenzten Abschlußanordnung ist es anfänglich ein Konstantstrom bis unter die Empfängerschwelle aus Richtung des dominanten Pegels. Im unteren Spannungsbereich nahe dem Nullpunkt hat die strombegrenzte Abschlußanordnung einen geringeren Widerstand als beim Abschluß mit einem linearen Widerstand. Somit wird das aufgrund der Strombegrenzung anfänglich langsamere Umladen der Buskapazität durch ein zum Ende des Umladevorgangs vergleichsweise schnelleres Umladen zeitlich wieder wettgemacht. Insgesamt ergibt sich so ein gleich schnelles oder sogar schnelleres Umladen als mittels linearen Widerstand. Dabei ist der gesamte Strom im statischen dominanten Zustand wesentlich geringer und damit ist auch die Abstrahlung geringer. Gleichzeitig ist aber auch die Einstrahlfestigkeit im rezessiven Zustand besser als mit einem Widerstand, da der rezessive Pegel insgesamt niederohmiger abgeschlossen ist.

Der erste Quadrant in der Strom-/Spannungskennlinie der strombegrenzten Abschlußanordnung ist über den gesamten Bereich einer zu erwartenden Einstrahlung niederohmiger als der dritte Quadrant.

Der niederohmigere erste Quadrant wirkt sich außerdem auch vorteilhaft auf den gelegentlich bestehenden betriebs- bzw. alterungsbedingten Masseversatz zwischen den einzelnen Stationen in genannten Systemen aus. Dieser Masseversatz führt im Zusammenhang mit der statischen Empfangsschwelle zu möglichen Einbußen beim Signal-/Rauschabstand. Bei Systemen, in denen Masseversatz auftritt und der rezessiven Pegel mit linearen Widerständen eingestellt wird, stellt sich ein rezessiver Pegel zwischen den unterschiedlichen Massepotentialen ein, und zwar mit einer Gewichtung der über die Stationen verteilten, linearen Widerstände. Die Empfangsschwellen der einzelnen Stationen sind jeweils auf die lokale Masse bezogen und dadurch genauso unterschiedlich wie die Massepotentiale. Damit wird der Signal-/Rauschabstand für die Stationen unterschiedlich und die Einstrahlfestigkeit gemindert, wodurch Fehlerkennungen von dominanten Pegeln bei Empfängern mit entsprechendem Masseversatz entstehen könnten.

Wird die Einstellung des rezessiven Pegels mit einer erfindungsgemäßen Abschlußanordnung vorgenommen, bei dem der dritten Quadrant hochohmiger ist bzw. weniger Strom abgibt als im ersten Quadranten, so stellt sich der rezessive Pegel prinzipiell näher bei dem niedrigeren Massepotential ein und es ergibt sich für die Stationen ein insgesamt besserer Signal-/Rauschabstand.

Der Widerstand wird durch eine Abschlußanordnung ersetzt und die Strombegrenzung an den einzelnen Stationen so eingestellt, daß die Summe aller Ströme die gewünschte Geschwindigkeit für das Einstellen des rezessiven Pegels erlaubt und gleichzeitig die Stromfähigkeit des Treibers nicht überschritten wird. Die Steigungen der einzelnen Abschnitte der Strom/Spannungskennlinie können durch Parameteränderung so programmiert werden, daß der rezessive Pegel bei besonders häufigen Einstrahlungen optimal beibehalten wird. Ein weiterer Vorteil stellt die Integrationsmöglichkeit der Stromquelle dar.

Die Strom/Spannungskennlinie stellt den entsprechenden Verlauf dar, wenn die Übertragungsleitung Einstrahlungen ausgesetzt wird, die bei normalerweise rezessiv eingeprägtem Pegel den Strom und die Spannung auf der Leitung verändern. Die Strom-/Spannungskennlinie der Abschlußanordnung für den rezessiven Pegel ist beispielsweise eine Kennlinie mit drei Knickpunkten.

Alle Maßnahmen und Vorteile sind auf differentielle Systeme übertragbar, indem sie auf zwei komplementär angesteuerte Busleiter angewendet werden. Dabei ist das Verhalten des Treibers für den zweiten Busleiter symmetrisch zu dem Verhalten des Treibers für den ersten Busleiter. Der Treiber für den zweiten Busleiter ist demnach im ersten Quadranten hochohmiger als im dritten Quadranten. In den differentiell wirkenden Systemen wird in der Regel ein relativ hoher Gleichtaktbereich toleriert und so eine hohe Einstrahlfestigkeit ermöglicht.

Nachfolgend werden Ausführungsbeispiele anhand der Figuren näher erläutert. Es zeigen:
- Fig. 1: ein Blockschaltbild für den Aufbau eines Übertragungssystems
- Fig. 2: ein Blockschaltbild für den Aufbau einer Station
- Fig. 3: Strom-/Spannungskennlinie für die Einstellung des rezessiven Pegels mit einem linearen Widerstand und für die Einstellung mit einer strombegrenzten Abschlußanordnung
- Fig. 4: Strom-/Spannungskennlinie für ein differentielles Übertragungssystem
- Fig. 5: Schaltungsanordnung für Abschlußanordnung für den rezessiven Pegel auf Leiter 1
- Fig. 6: Schaltungsanordnung für Abschlußanordnung für den rezessiven Pegel auf Leiter 1
- Fig. 7: Schaltungsanordnung für Abschlußanordnung für den rezessiven Pegel auf Leiter 2
- Fig. 8: Schaltungsanordnung für Abschlußanordnung für den rezessiven Pegel auf Leiter 2

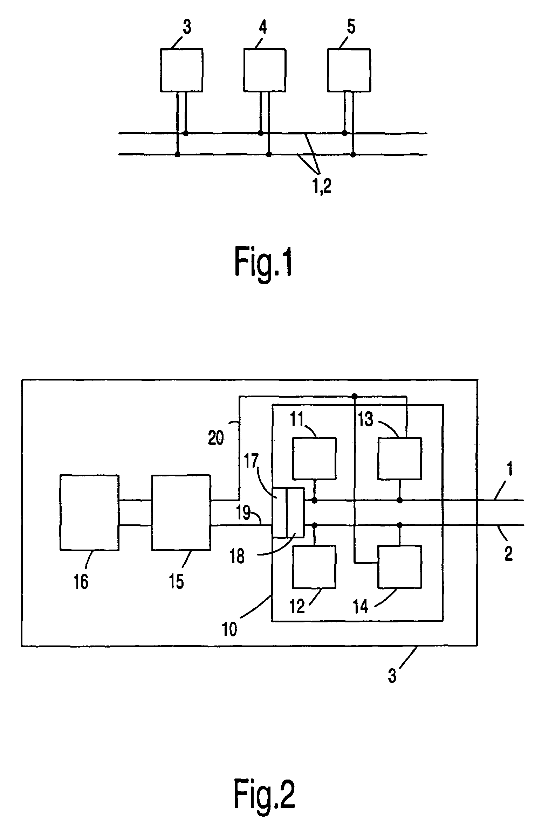

Figur 1 zeigt ein Übertragungssystem mit mehreren Stationen 3-5, die über einen differentiellen Bus, bestehend aus zwei Leitern 1 und 2, kommunizieren.

Figur 2 bezieht sich auf ein differentielles Übertragungssystem. Figur 2 zeigt eine Station, z.B. 3 (Fig.1) die einen Übertrager 10 enthält, der wiederum die Mittel 11 und 12 für die Abschlußanordnung für rezessive Pegel und Mittel 13 und 14 zum Senden von dominanten Pegeln aufweist. Der Übertrager enthält außerdem den Empfänger 17 mit vorgeschaltetem Tiefpaß 18. Außerdem beinhaltet die Station 3 in der Regel Mittel 15 zur Abwicklung eines Datenübertragungsprotokolls, die mit dem Übertrager 10 über mindestens eine Sendeleitung 20 und eine Empfangsleitung 19 verbunden sind. Ein Microcontroller 16 übernimmt die Abwicklung anwendungsspezifischer Aufgaben. Die Einstellung eines rezessiven Pegels auf der Leitung 1 übernimmt Mittel 11. Ein dominanter Pegel wird auf Leitung 1 mit dem Mittel 13 eingespeist. Auf der Leitung 2 wird ein rezessiver Pegel mit dem Mittel 12 eingestellt und ein dominanter Pegel mit dem Mittel 14 eingespeist.

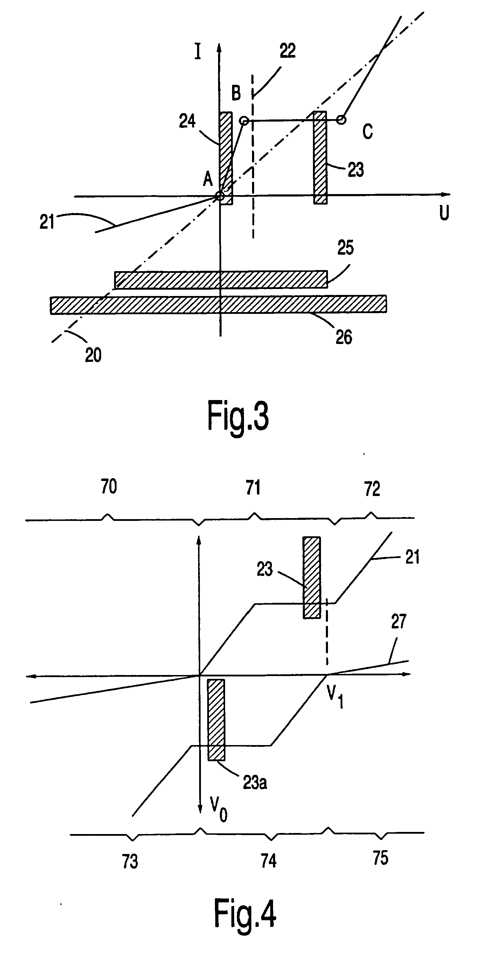

Figur 3 zeigt ein Strom-/Spannungsdiagramm für einen Leiter in dem die Strom-/Spannungskennlinie 20 für das Verhalten des rezessiven Pegels bei Einstrahlung mit einem Widerstand und die Kennlinie 21 für das Verhalten des rezessiven Pegels bei Einstrahlung mit der erfindungsgemäßen Abschlußanordnung gegenübergestellt sind.

Die Kennlinie 21 der erfindungsgemäßen Abschlußanordnung weist 3 Knickpunkte A, B, und C auf. Sie stellt das Verhalten dar, wenn die Busleitungen Einstrahlungen ausgesetzt werden. Im Normalfall bei eingestelltem rezessiven Pegel 24 und keiner Störung liegen die Strom/Spannungswerte beispielsweise nahe dem Nullpunkt. Einstrahlpegel, deren Spannungen unter der Spannung der Empfängerschwelle 22 liegen, werden als rezessiv 24, und Pegel, deren Spannungen über der Spannung der Empfängerschwelle 22 liegen, als dominant 23 vom Empfänger erkannt.

Es ist zu erkennen, daß die Kennlinie 21 im dritten Quadranten in diesem Strom-/Spannungsdiagramm hochohmiger ist, als im ersten Quadranten. Wenn bei der Kennlinie 21 die Empfängerschwelle 22 erreicht ist, besteht keine Notwendigkeit, den Strom weiter ansteigen zu lassen. Dies ist in der Kennlinie 21 ab dem Punkt B zu erkennen, von dem an die Strombegrenzung wirkt. Dieser konstante Strom wird bis zum Arbeitspunkt 23 des Treibers für den dominanten Pegel beibehalten. Erst danach wird die Strombegrenzung im Punkt C wieder aufgehoben, um den Strom bei großen Einstrahlpegeln 26 ansteigen zu lassen.

Bei der Kennlinie 21 fließt beim Umladen der Buskapazität vom dominanten zum rezessiven Pegel zuerst ein konstanter Strom bis unter, die Empfangsschwelle 22, im Gegensatz zur Kennlinie 20, bei der anfangs ein großer Strom fließt. Unterhalb dieser Empfangsschwelle 22 ist der Treiber jedoch niederohmiger als der Widerstand, so daß zum Ende des Umladevorgangs die Buskapazität mit einem höheren Strom umgeladen wird. Dadurch ergibt sich ein schnelleres Umladen als mittels Widerstand. Da der strombegrenzte Treiber im dritten Quadranten einen höheren Widerstand aufweist, wird sich bei einem geringen Einstrahlungspegel 25 während eines rezessiven Pegels der Gleichspannungspegel noch deutlicher in Richtung rezessiver Pegel bewegen, so daß die logische Auswertung in jedem Fall rezessiv bleibt.

Figur 4 zeigt ein Strom-/Spannungsdiagramm für ein differentielles System mit den Kennlinien 21 für die strombegrenzte Abschlußanordnung für den ersten Leiter 1 und Kennlinie 27 für zweiten Leiter. Das Verhalten der beiden Abschlußanordnungen ist symmetrisch zueinander. Die Abschlußanordnung der Kennlinie 27 ist im ersten Quadranten hochohmiger als im dritten. Dieses Verhalten ist zum Verhalten der Abschlußanordnung der Kennlinie 21 genau entgegengesetzt, denn dieser ist im ersten Quadranten niederohmiger, als im dritten Quadranten. Der Vorteil dieser differentielle Übertragung ist, daß sich Störungen auf beide Leiter gleich auswirken, so daß bei der Auswertung der übertragenen Signale durch Differenzbildung der beiden Signale die eingestrahlte Störungen eliminiert werden.

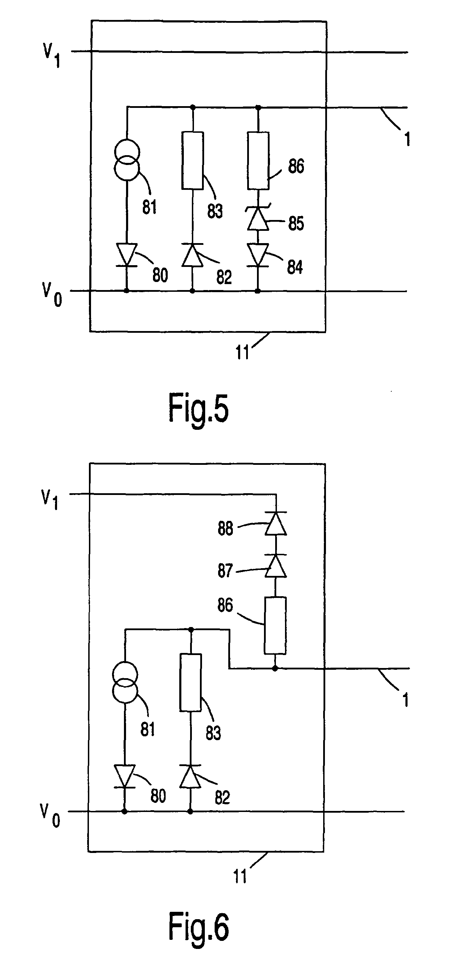

Figur 5 zeigt eine Schaltungsanordnung für die Abschlußanordnung für z.B. Mittel 11 auf Leitung 1. Auf der Leitung 1 wird ein rezessiver Pegel aus einer Spannung V₀ eingestellt. Die Diode 80 mit der Stromquelle 81 bestimmen im wesentlichen den Strom-/Spannungsverlauf im Bereich 71 von Knickpunkt A bis Knickpunkt C für einen Anordnung mit einer Kennlinie 21 in Fig. 3. Diode 82 mit dem Widerstand 83 bestimmen den Verlauf der Kennlinie 21 (Fig.3) im Bereich 70 des dritten Quadranten. Die Diode 84 mit der Z-Diode 85 und dem Widerstand 86 bestimmen den Verlauf der Kennlinie 21 (Fig.3) im Bereich 72 nach Knickpunkt C.

Figur 6 zeigt eine weitere Schaltungsanordnung für den Abschluß des rezessiven Pegels auf Leitung 1. Die Diode 80 und die Stromquelle 81 sind wie in Figur 5 für den Bereich 71 zwischen Knickpunkt A und Knickpunkt C verantwortlich. Die diesem Zweig parallelgeschalteten Diode 82 in Reihe mit dem Widerstand 83 bestimmen den Verlauf der Kennlinie 21 (Fig.3) im Bereich 70 im dritten Quadranten. Der Widerstand 86 und zwei in Reihe geschaltete Dioden sind zur Spannung V₁ geklemmt und bestimmen den Bereich 72 nach dem Knickpunkt C.

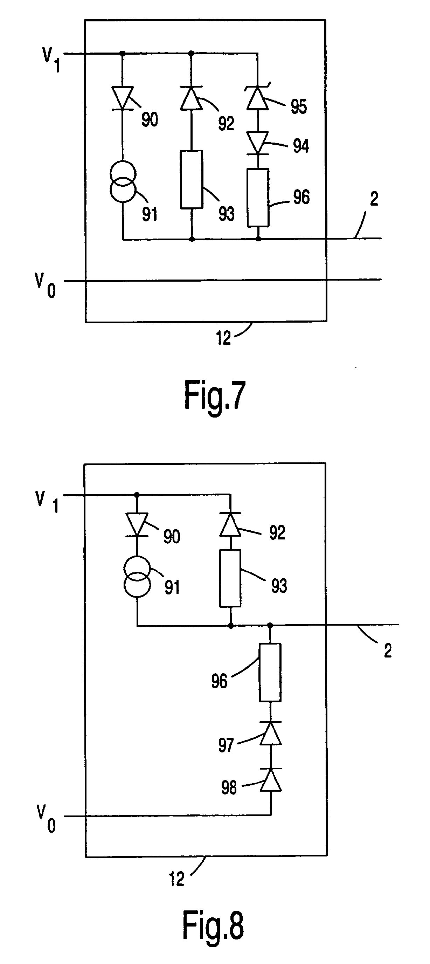

Figur 7 zeigt eine Schaltungsanordnung für Mittel 12 zum Einstellen des rezessiven Pegels in Leitung 2. Dazu wird aus der Spannung V₁ der rezessive Pegel eingestellt, der komplementär zu dem rezessiven Pegel des Mittels 11 aus Fig.5 ist. Die Diode 90 und die Stromquelle 91 sind für den Bereich 74 des Verlaufs der Kennlinie 27 (Fig.4) verantwortlich. Der zu diesem Zweig parallelgeschaltete, aus Widerstand 93 und Diode 92 bestehende Zweig, bestimmt im wesentlichen den Verlauf der Kennlinie 27 (Fig.4) im Bereich 75 im ersten Quadranten des Strom-/Spannungsdiagramms. Den Verlauf der Kennlinie 27 (Fig.4) im dritten Quadranten im Bereich 73 bestimmt weitgehend der aus einer Z-Diode 95, einer dazu ein Reihe geschalteten Diode 94 und einem Widerstand 96 bestehende Zweig, der zwischen die Spannung V₁ und die Leitung 2 geklemmt ist.

Figur 8 zeigt eine weitere Schaltungsanordnung zur Einspeisung eines rezessiven Pegels in die Leitung 2. Im Vergleich zur Figur 7 ist in dieser Schaltungsanordnung der Zweig des Treibers, der den Verlauf der Kennlinie 27 im Bereich 73 bestimmt, zur Spannung V₀ über den Widerstand 96 und die dazu in Reihe geschalteten Dioden 97 und 98 geklemmt.

## Patentansprüche

1. Schaltungsanordnung zur BIAS Einstellung von Buspegeln für ein System zum Übertragen von Daten auf wenigstens einem Leiter (1, 2), an den mehrere Stationen (3-5) mit Sendern und Empfängern mit vorgeschaltetem Tiefpaß (18) angeschlossen sind, wobei der Leiter (1, 2) einen rezessiven Pegel führt und von einem Sender auf einen dominanten Pegel schaltbar ist, **dadurch gekennzeichnet, dass** die Stationen (3-5) eine Abschlussanordnung enthalten, die für positive Spannungen niederohmiger als für negative Spannungen ist, wobei der Leiter (1, 2) in einem Bereich oberhalb des dominanten Pegels niederohmiger als im negativen Spannungsbereich abgeschlossen ist.

2. Schaltungsanordnung nach Anspruch 1, **dadurch gekennzeichnet, dass** der rezessive Pegel mit einer Stromquellenanordnung (11) im Sender einstellbar ist und die Strom/Spannungskennlinie der Abschlussanordnung im ersten Quadranten aus dem Nullpunkt mit einem positiven Anstieg ansteigt und bei einer Spannung unterhalb einer Empfangsschwelle (22) bis zu einer Spannung oberhalb des dominanten Pegels mit einem konstanten Strom begrenzt ist.

3. Schaltungsanordnung nach Anspruch 1, **dadurch gekennzeichnet, dass** der dritte Quadrant dieser Strom-/Spannungskennlinie der Abschlussanordnung hochohmiger ist als der erste Quadrant.

4. Schaltungsanordnung nach Anspruch 1, **dadurch gekennzeichnet, dass** die Leiter (1, 2) mit komplementären Pegeln angesteuert werden.

5. Schaltungsanordnung nach Anspruch 1, **dadurch gekennzeichnet, dass** die Kennlinienabschnitte (70, 71, 72, 73, 74, 75) programmierbar sind.

## Claims

1. A circuit arrangement for bias adjustment of bus levels for a system for the transmission of data via at least one lead (1,2) whereto a plurality of stations (3-5) with transmitters and receivers with preceding low-pass filters (18) are connected, which lead (1,2) carries a recessive level and can be switched to a dominant level by a transmitter, **characterized in that** the stations (3-5) are provided with a termination arrangement which has a lower impedance for positive voltages than for negative voltages, which lead (1,2) in a range above the dominant level has a lower impedance termination than in the negative voltage range.

2. A circuit arrangement as claimed in claim 1, **characterized in that** the recessive level can be adjusted by means of a current source arrangement (11) in the transmitter, and that the current/voltage characteristic of the termination arrangement rises from the zero point with a positive rise in the first quadrant and is limited with a constant current for a voltage from below a receiving threshold (22) to a voltage beyond the dominant level.

3. A circuit arrangement as claimed in claim 1, **characterized in that** the impedance in the third quadrant of this current/voltage characteristic of the termination arrangement is higher than that in the first quadrant.

4. A circuit arrangement as claimed in claim 1, **characterized in that** the leads are driven with complementary levels.

5. A circuit arrangement as claimed in claim 1, **characterized in that** the characteristic segments (70, 71, 72, 73, 74, 75) are programmable.

## Revendications

1. Dispositif de circuit pour l'ajustement de la polarisation de niveau de bus pour un système de transfert de données sur au moins un conducteur (1, 2), sur lequel sont connectées plusieurs stations (3-5) avec des émetteurs et des récepteurs avec un passe-bas (18) en amont, dans lequel le conducteur (1, 2) guide un niveau récessif et peut être connecté par un émetteur sur un niveau dominant, **caractérisé en ce que** les stations (3-5) contiennent un agencement de fermeture qui est à un niveau ohmique plus bas pour les tensions positives que pour les tensions négatives, le conducteur (1, 2) pouvant être fermé dans une zone au-dessus du niveau dominant à un niveau ohmique moindre que dans la zone de tension négative.

2. Dispositif de circuit selon la revendication 1, **caractérisé en ce que** le niveau récessif peut être ajusté avec un agencement de source de courant (11) dans l'émetteur et la caractéristique courant/tension du système de fermeture augmente dans le premier quadrant à partir du point zéro avec une montée positive, et est bornée par un courant constant pour une tension au-dessous d'un seuil de réception (22) jusqu'à une tension au-dessus du niveau dominant.

3. Système de circuit selon la revendication 1, **caractérisé en ce que** le troisième quadrant de cette caractéristique courant/tension du système de fermeture est à niveau ohmique supérieur au premier quadrant.

4. Système de circuit selon la revendication 1, **caractérisé en ce que** les conducteurs (1, 2) sont pilotés par des niveaux complémentaires.

5. Dispositif de circuit selon la revendication 1, **caractérisé en ce que** les sections caractéristiques (70, 71, 72, 73, 74, 75) sont programmables.
